# EUROPÄISCHE PATENTSCHRIFT

(11) **EP 0 967 587 B1**
(45) Veröffentlichungstag und Bekanntmachung des Hinweises auf die Patenterteilung: **28.11.2001**
(21) Anmeldenummer: 99109339.4
(22) Anmeldetag: 31.05.1999
(51) Int. Cl.: G09B 21/00, G06F 3/00

(54) **Vorrichtung zum Eingeben und Auslesen von Daten**
Data writing and reading device
Dispositif d'entrée et de lecture de données

(30) Priorität: 23.06.1998 DE 19827905
(43) Veröffentlichungstag der Anmeldung: 29.12.1999
(73) Patentinhaber: F.H. Papenmeier GmbH & Co. KG, 58239 Schwerte (DE)
(72) Erfinder: Bornschein, Hans-Jürgen, 58239 Schwerte (DE)
(74) Vertreter: Schwabe - Sandmair - Marx

(56) Entgegenhaltungen:
- WO-A-97/15036
- DE-A- 4 241 937
- US-A- 4 905 001
- US-A- 5 164 712
- PATENT ABSTRACTS OF JAPAN vol. 1995, no. 11, 26. Dezember 1995 (1995-12-26) & JP 07 219694 A (HITACHI LTD;OTHERS: 01), 18. August 1995 (1995-08-18)

## Beschreibung

Die vorliegende Erfindung bezieht sich auf eine Vorrichtung zum Eingeben und Auslesen von Daten, insbesondere ein taktiles Display.

Sogenannte taktile Displays, wie z.B. Brailleschrift-Ausgabe-Vorrichtungen, auch Braillezeilen genannt, mit denen blinde PC-Nutzer die Informations-Inhalte von Bildschirmen auslesen können, sind seit langem bekannt. Sie bestehen in der Regel aus einem Gehäuse, einer Vielzahl von meist in Reihe angeordneten Braillemodulen auf der Gehäuse-Oberfläche und mehreren Tastern, sowie auch Schaltern, die als Eingabeelemente bzw. Steuerimpulsgeber dienen, von denen sich ein Teil, parallel zur Braillemodulreihe angeordnet, auf der Front-Schmalseite des Gehäuses befindet.

Wird während des Auslesens der Braillezeile eine bestimmte Steuerinformation benötigt, kann diese z.B. durch Daumenbetätigung des zugehörigen Steuerimpulsgebers eingegeben werden. Hierbei muß der Nutzer die mit der Lesehand erreichte Position immer dann verlassen, wenn die jeweilige Lese-Position und die Steuerimpulsgeber-Position nicht untereinander liegen, was in der Regel der Fall ist.

Eine in der Praxis bekannt gewordene Braille-Ausgabevorrichtung ist in dem Prospekt "BRAILLEX 2D - Screen" der Firma. F. H. Papenmeier GmbH & Co. KG, D-58239 Schwerte, dargestellt. Auf der abgeschrägten Front-Schmalseite des flachen Gehäuses sind die verschiedenen Steuerimpulsgeber angeordnet, die für das Arbeiten eines Blinden mit der Braillezeile am PC-Arbeitsplatz erforderlich sind.

Diese Anordnung der Braillezeile und die parallel dazu angeordneten Steuerimpulsgeber auf der abgeschrägten Front-Schmalseite des Gehäuses ermöglicht es, daß der Nutzer beim Auslesen der Braillezeile, das bekanntlich mit mindestens einer Fingerkuppe einer Hand geschieht, die Steuerimpulsgeber z.B. mit den Daumen betätigen kann, wobei in den meisten Fällen die Lesehand des Nutzers die erreichte Leseposition verlassen muß.

Eine weitere bekannte Braille-Ausgabevorrichtung ist in dem Prospekt "BRAILLEX Compact" der gleichen, vorstehend genannten Firma dargestellt. Auch hierbei muß in den meisten Fällen zur Betätigung der Steuerimpulsgeber mit den Daumen auf der Front-Schmalseite des Gehäuses die jeweilige Leseposition auf der Braillezeile verlassen werden.

Diese in der Praxis bekannten Vorrichtungen haben jedoch mehrere Nachteile:

Um die Steuerimpulsgeber während des Braillelesens mit den Daumen zu betätigen, muß der Nutzer in den meisten Fällen seine gerade erreichte Leseposition verlassen. Weiterhin erfordert das Hin- und Herspringen der Hand bzw. der Hände zwischen dem Braillelesen und dem Betätigen der Steuerimpulsgeber erhöhte Konzentration, die zu vorzeitiger Ermüdung und zu Fehlern führt. Des weiteren kostet das Wiederaufsuchen der verlassenen Leseposition Zeit, was sich nachteilig auf die Arbeitseffizienz auswirkt.

Aus der WO 97/15036 ist eine Vorrichtung zur Steuerung der Position von Braille-Stiften von Braille-Elementen eines Braille-Feldes bekannt, mit
a) mindestens einem Ausgabeelement, insbesondere einem Braille-Element, zum Ausgeben von Braille-Daten durch entsprechende Veränderung des Oberflächenprofils;
b) mindestens einem Eingabeelement zum Eingeben von Daten, wobei das Eingabelelement in mindestens zwei verschiedene Stellungen gebracht werden kann, um so Daten einzugeben; wobei
c) der maximale Abstand zwischen dem mindestens einem Eingabeelement und dem mindestens einen Ausgabeelement einen bestimmten Maximalwert nicht überschreitet, so dass mit einer Hand das Eingabeelement und das Ausgabeelement gleichzeitig berührt bzw. betätigt werden können, um positionsunabhängig mehrere unterschiedliehe Steuerbefehle auszulösen.

Der Erfindung liegt daher die Aufgabe zugrunde, ein taktiles Display zu schaffen, das die vorstehenden Nachteile vermeidet. Insbesondere soll eine Eingabevorrichtung, also z.B. ein Steuerimpulsgeber, so ausgestaltet sein, daß sie während des Braillelesens in allen Lesepositionen betätigt werden kann um mehrere unterschiedliche Steuerbefehle aulösen zu können, wobei die Lesehand bzw. -Hände dabei die jeweilige Leseposition nicht verlassen muß bzw. verlassen müssen.

Dies wird durch die Merkmale des Anspruchs 1 erreicht.

Zweckmäßige Ausführungsformen werden in den Unteransprüchen definiert.

Die mit der Erfindung verbundenen Vorteile basieren auf der folgenden Ausgestaltung der erfindungsgemäßen Vorrichtung:
Das Eingabeelement, welches jedoch nicht notwendig als ein einzelnes Element ausgestaltet sein muß, sondern z.B. aus zwei oder mehr getrennten Elementen bestehen kann, kann in mindestens drei verschiedene Stellungen in einer Richtung gebracht werden und ist so bei den Ausgabeelementen, also z.B. den Brailleelementen, angeordnet, daß der maximale Abstand zwischen dem Eingabeelement und den Ausgabeelementen einen bestimmten Maximalwert nicht überschreitet, wobei der Maximalwert so bemessen wird, daß mit einer Hand gleichzeitig das Ausgabeelement bzw. die Ausgabeelemente berührt werden können, um einerseits Informationen auszulesen und andererseits das Eingabeelement zu betätigten, ohne dabei die Berührung der Eingabeelemente zu unterbrechen. Der Maximalwert kann z.B. im Bereich von 15 - 25 cm liegen und beträgt bevorzugt ca. 20 cm. Da das Eingabeelement so ausgestaltet ist, daß der Abstand zu dem bzw. den Ausgabeelementen einen maximalen Wert nicht überschreitet, muß der Benutzer der erfindungsgemäßen Vorrichtung nicht mehr seine auf den Ausgabeelementen aufliegende lesende Hand von einer beliebigen erreichten Leseposition wegnehmen, um das Eingabeelement zu betätigen. Dabei kann er z.B. positionsunabhängig mehrere unterschiedliche Steuerbefehle auslösen.

Durch die erfindungsgemäße Ausgestaltung ist das Eingabeelement von jedem Ausgabeelement, oder auch nur von einer bestimmten Gruppe der Ausgabeelemente, soweit entfernt, daß, wenn sich mindestens eine Hand bzw. ein Finger auf den Ausgabeelementen zum Lesen befindet, das Eingabeelement mit einem anderen Finger der Hand, z.B. dem Daumen, betätigt werden kann, wobei der lesende Finger auf der aktuellen Leseposition der Ausgabeelemente verbleiben kann. Da die Leseposition zum Betätigen des Eingabeelements nun nicht mehr verlassen werden muß, entfällt für den Benutzer auch das zeitraubende Wiederauffinden der zuletzt verlassenen Leseposition, was zu einer erheblichen Effektivitätssteigerung bei der Arbeit mit der erfindungsgemäßen Vorrichtung führt. Folglich wird die Arbeit für einen blinden Benutzer der erfindungsgemäßen Vorrichtung auch schneller und entspannter. Des weiteren kann auch mit weniger Fehlern gearbeitet werden da keine Unterbrechungen mehr beim Lesen vorkommen.

Es ist bei der erfindungsgemäßen Vorrichtung weiterhin von Vorteil, daß neu abgerufene Informationen durch eine geeignete Betätigung des Eingabeelements in der jeweiligen Leseposition sofort gelesen werden können. Dies ist insbesondere bei der Arbeit mit Tabellen sehr hilfreich, die bei bisher bekannten Eingabe-/Ausgabe-Vorrichtungen sehr umständlich und folglich sehr fehleranfällig ist.

Bei einer bevorzugten Ausführungsform der Erfindung ist das Eingabeelement eine Steuerleiste, welche vorteilhaft parallel zu den Ausgabeelementen, z.B. den Brailleelementen, angeordnet ist. Diese Steuerleiste kann länger oder genauso lang sein wie die aus den Ausgabeelementen gebildete Zeile. Es ist jedoch auch denkbar, daß die Steuerleiste kürzer ist als die Zeile mit den Ausgabeelementen, wobei jedoch darauf geachtet werden muß, daß die Steuerleiste auch dann noch mit einer Hand erreichbar bleibt und z.B. mit einem Daumen betätigt werden kann, wenn ein am Rande der Ausgabeelementzeile liegendes Ausgabeelement mit einem Finger abgelesen wird, ohne den Finger dabei von dem Ausgabeelement, z.B. dem Brailleelement, nehmen zu müssen.

Es ist auch denkbar, daß das Eingabeelement, bzw. die Steuerleiste, aus zwei oder mehreren unterteilten und unabhängig voneinander betätigbaren Elementen besteht. Dies kann bei schnellen Braille-Lesern vorteilhaft sein, welche beidhändig lesen können. Dabei ist dann darauf zu achten, daß z.B. bei einem zweigeteilten Eingabeelement bzw. einer aus zwei Elementen bestehenden Steuerleiste mit z.B. einem rechten und einem linken Teil diese zwei Teile des Eingabeelementes jeweils so angeordnet sind, daß bezüglich einer ersten z.B. rechts angeordneten Gruppe der Ausgabeelemente das erste Eingabeelement einen solchen Maximalabstand zu der ersten Gruppe der Ausgabeelemente aufweist, daß beim Lesen eines jeden einzelnen Ausgabeelements der ersten Ausgabeelementgruppe mit einer Hand das erste Eingabeelement betätigt werden kann, ohne dabei die Leseposition auf jedem beliebigen Ausgabeelement der ersten Ausgabeelementgruppe verlassen zu müssen.

Entsprechend ist das zweite z.B. linke Eingabeelement bezüglich einer zweiten z.B. linken Gruppe der Ausgabeelemente so angeordnet, daß ein gleichzeitiges Lesen und Eingeben mit einer Hand, wie vorangehend beschrieben, möglich ist. Somit kann z.B. im Falle einer Zweiteilung in rechte und linke Bereiche sehr effizient mit zwei Händen gearbeitet werden, wobei mit jeder Hand jeweils eine erste bzw. eine zweite Ausgabeelementgruppe gelesen werden kann, wobei die jeweils zugeordneten ersten und zweiten Eingabeelemente mit der linken bzw. rechten Hand bedient werden können, ohne die jeweilige Hand von der jeweils zugeordneten Gruppe der Ausgabeelemente nehmen zu müssen. Dabei ist wie vorstehend erwähnt, insbesondere darauf zu achten, daß auch die am Rand der jeweiligen Ausgabegruppe liegenden Ausgabeelemente noch so angeordnet sind, daß auch diese Rand-Leseposition nicht verlassen werden muß, um das zugehörige Eingabeelement zu bedienen.

Natürlich ist eine entsprechende Ausgestaltung der erfindungsgemäßen Vorrichtung auch mit einer Dreiteilung des Eingabeelements bzw. auch weiteren Unterteilungen des Eingabeelements möglich, wobei die jeweiligen Eingabeelemente dann jeweils entsprechenden Ausgabeelementen zugeordnet sind.

Bei der eben beschriebenen Ausgestaltung der erfindungsgemäßen Vorrichtung ist es jedoch auch möglich, daß bestimmte Ausgabeelemente so angeordnet sind, daß, wenn diese ausgelesen werden, auch zwei oder mehr Eingabeelemente betätigt werden können, ohne die Leseposition auf dem Ausgabeelement zu verlassen. Dies kann z.B. der Fall sein, wenn ein in etwa parallel zu einer Ausgabezeile liegendes Eingabeelement aus z.B. zwei oder mehr parallel angeordneten Steuerelementen besteht, so daß der Benutzer z.B. zwischen einer oberen und einer unteren Steuerleiste wählen kann, um so unterschiedliche Steuerinformationen bzw. Daten einzugeben. Natürlich können auch drei oder mehr Steuerleisten parallel zueinander angeordnet werden.

Bei einer bevorzugten Ausführungsform der Erfindung ist das Eingabeelement so ausgestaltet, daß es in einer ersten Richtung bewegt werden kann, um so z.B. durch eine Verschiebung nach rechts bzw, nach links zwei verschiedene Steuerdaten einzugeben. Natürlich ist es auch möglich, eine Ruhelage vorzusehen, wobei das Eingabeelement dann aus der Ruhelage in einer ersten Richtung, z.B. parallel zu einer Längsrichtung der bei dem Eingabeelement angeordneten Ausgabeelemente verschoben werden kann, also z.B. nach links und nach rechts, um so drei unterschiedliche Zustände zur Eingabe von drei unterschiedlichen Steuerinformationen zu haben, wobei z.B. in Ruhestellung keine Steuerinformation eingegeben wird. Es ist auch möglich, das Eingabeelement nicht nach links bzw. rechts bezüglich der Längsrichtung der Ausgabeelementzeile zu bewegen, sondern auch z.B. nach oben oder nach unten. Dabei kann natürlich ebenso, wie oben geschildert, eine Ruhelage zwischen z.B. zwei verschiedenen Positionen vorgesehen sein.

Es ist auch möglich, daß das Eingabeelement, z.B. die Steuerleiste, in mehr als nur zwei oder drei unterschiedliche Positionen in einer ersten Richtung gebracht werden kann. Z.B. kann die erfindungsgemäße Vorrichtung so ausgestaltet sein, daß die Eingabevorrichtung von einer Ruhelage aus in zwei z.B. einrastende rechte Positionen und ebenso zwei einrastende linke Positionen bewegt werden kann, um so vier unterschiedliche Stellungen des Eingabeelements zu erzielen, wobei die Eingabevorrichtung zwischen den zwei rechten und linken Positionen eine Ruhelage aufweisen kann.

Selbstverständlich können in jeder Richtung auch mehrere unterschiedliche Eingabepositionen vorgesehen werden, welche vorteilhaft einrasten, um dem Benutzer so anzuzeigen, daß er gerade in einer bestimmten Position ist.

Es ist auch möglich, die Eingabevorrichtung so auszugestalten, daß ein vom Arbeiten mit einer Computer-Maus bekannter "Doppel-Klick" durchgeführt werden kann, um so bei nur einer Eingabeschaltstellung je nach Art der Eingabe, "einfacher Klick" oder "Doppel-Klick", unterschiedliche Steuerinformationen bzw. Daten einzugeben.

Bevorzugt ist die Eingabevorrichtung auch so ausgestaltet, daß sie neben einer ersten Richtung auch in einer zweiten Richtung verschiebbar bzw. betätigbar ist. Dies kann z.B. dadurch geschehen, daß eine Steuerleiste nach rechts, nach links, nach oben und nach unten in unterschiedliche Positionen gebracht werden kann. Dabei ist es möglich, die Steuerleiste so auszugestalten, daß sie z.B. um einen Drehpunkt gekippt werden kann. Es ist auch möglich, die Steuerleiste so auszugestalten, daß sie einfach nach oben bzw. unten verschoben werden kann ohne um einen Drehpunkt zu kippen. Es ist dabei vorteilhaft, die erste und zweite Bewegungsrichtung des Eingabeelements in etwa senkrecht zueinander anzuordnen, also z.B. rechts-links und oben-unten.

Die erfindungsgemäße Vorrichtung kann auch so ausgestaltet werden, daß die erste und zweite Bewegungsrichtung des Eingabeelements einen spitzen bzw. stumpfen Winkel zueinander aufweisen. Es ist auch denkbar, das Eingabeelement so auszugestalten, daß es in mehr als nur zwei unterschiedliche Richtungen bewegbar ist, um so die Anzahl der unterschiedlich einzugeben Daten bzw. Steuerinformationen zu vergrößern.

Bei der oben beschriebenen bevorzugten Ausführungsform der Erfindung mit mehr als einer Bewegungsrichtung des Eingabeelements kann natürlich in jeder Bewegungsrichtung des Eingabeelements mehr als nur eine oder zwei bestimmte Eingabepositionen vorgesehen werden, um so die Anzahl der eingebbaren Daten bzw. Steuerinformationen zu vergrößern.

Es ist vorteilhaft, die Eingabevorrichtung, also z.B. die Steuerleiste, so auszugestalten, daß diese eine nicht glatte bzw. griffige oder rauhe Oberfläche besitzt, so daß ein Abrutschen bei der Betätigung vermieden wird.

Die Erfindung wird nachfolgend anhand einer bevorzugten Ausführungsform beschrieben, wobei:

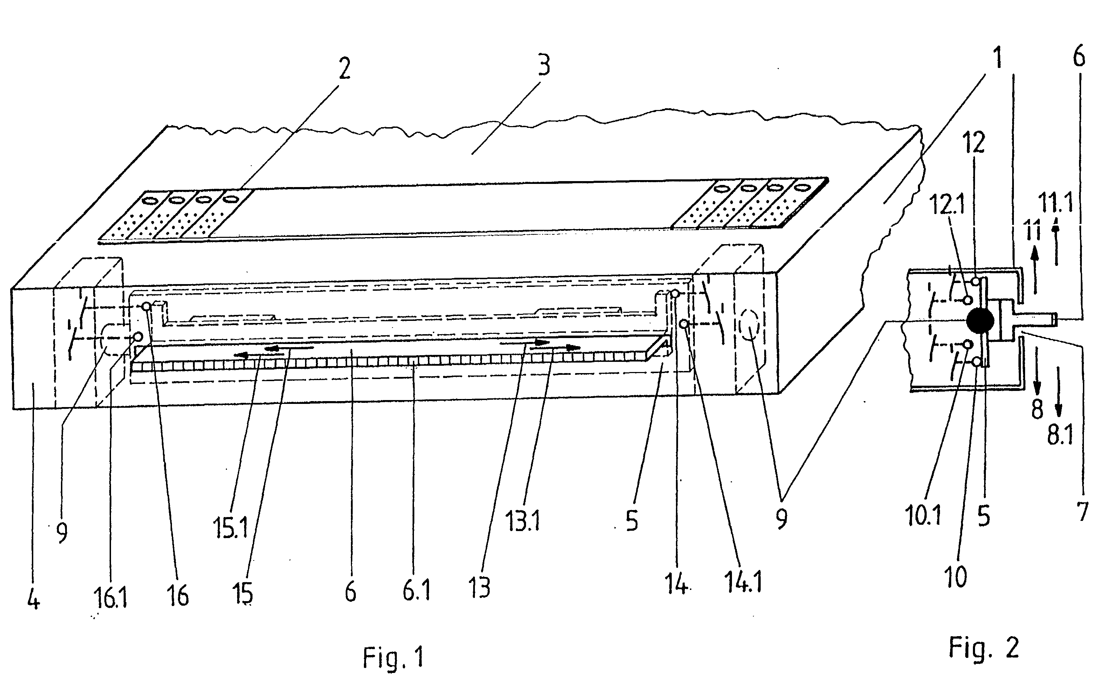

- Fig. 1: eine Ausführungsform der erfindungsgemäßen Vorrichtung zeigt; und
- Fig. 2: eine Seitenansicht der Schalt- und Steuerleiste zeigt.

Die Ausgabevorrichtung, wie z.B. ein taktiles Display, auch Braillezeile genannt, besteht aus einem Gehäuse 1 und einer Braillemodul-Reihe 2 auf der Gehäuseoberfläche 3. In der Front-Gehäuseschmalseite 4 ist die Schaltleiste 5 angeordnet, die mit ihrer Steuer-bzw. Tastleiste 6 und deren Rändelung 6.1 durch den Gehäuseschlitz 7 ragt.

Nachfolgend wird die Arbeitsweise für jeweils eine Schaltposition der Steuer- bzw. Tastleiste 6 in jeweils einer Bewegungsrichtung beschrieben:

Wird die Steuer- bzw. Tastleiste 6 mit dem Daumen nach unten, in Richtung 8 bewegt, so kippt die Schaltleiste 5 um den Drehpunkt 9 nach unten und klickt dabei den Taster 10 an. Wird die Tastleiste 6 um den Drehpunkt 9 in Richtung 11 nach oben bewegt, so kippt die Schaltleiste 5 um den Drehpunkt 9 nach oben und klickt dabei den Taster 12 an.

Durch das horizontale Verschieben der Schaltleiste 5 mit Hilfe der Steuer- bzw. Tastleiste 6 im Drehpunkt 9 nach rechts in Richtung 13 wird der Taster 14, und nach links in Richtung 15 wird der Taster 16 angeklickt.

Die Arbeitsweise der erfindungsgemäßen Vorrichtung für jeweils zwei bestimmte Stellungen der Steuer- bzw. Tastleiste 6 in einer Richtung ist wie folgt:

Wird die Tastleiste 6 mit dem Daumen nach unten in Richtung 8.1 bewegt, so kippt die Schaltleiste 5 um den Drehpunkt 9 über die Rasterstellung der ersten Ebene hinaus und klickt den Taster 10.1 an. Wird die Tastleiste 6 nach oben in die Richtung 11.1 bewegt, so kippt die Schaltleiste 5 um den Drehpunkt 9 auch hier über die Rasterstellung der ersten Ebene hinaus und klickt den Taster 12.1 an.

Durch das horizontale Verschieben der Schaltleiste 5 mit Hilfe der Tastleiste 6 im Drehpunkt 9 nach rechts in Richtung 13.1 wird der neben dem Taster 14 liegende Taster 14.1, und in Richtung 15.1 der neben dem Taster 16 liegende Taster 16.1 angeklickt.

Die jeweilige Rücksetzung der Steuerleiste in Nullposition erfolgt hier durch die Rückstellkraft der Taster, z.B. mittels eines Federelements. Durch Doppelklick der Taster kann die Anzahl der eingebbaren Steuerimpulse leicht vervielfacht werden.

Bei sehr langen Braillezeilen 2 kann die Schaltleiste 5 mit zugeordneter Tastleiste 6 z.B. aus statischen Gründen geteil: sein.

Die Erfindung sieht also vor, einen ein- oder mehrteiligen langgestreckten Mehrfachschalter bereitzustellen, der von jeder beliebigen Leseposition auf der BrailleZeile in gleicher Weise (mit gleicher Funktion) betätigbar ist. Damit wird die eingangs genannte Aufgabe erfüllt.

## Patentansprüche

1. Vorrichtung zum Eingeben und Auslesen von Daten mit:
a) mindestens eine Ausgabeelement (2), insbesondere einem Braille-Element, zum Ausgeben von Braille-Daten durch entsprechende Veränderung des Oberflächenprofils;
b) mindestens einem Eingabeelement (6) zum Eingeben von Daten, wobei das Eingabelelement (6) in mindestens zwei verschiedene Stellungen gebracht werden kann, um so Daten einzugeben; wobei
c) der maximale Abstand zwischen dem mindestens einem Eingabeelement (6) und dem mindestens einen Ausgabeelement (2) einen bestimmten Maximalwert nicht überschreitet, so dass mit einer Hand das Eingabeelement (6) und das Ausgabeelement (2) gleichzeitig berührt bzw. betätigt werden können, um positionsunabhängig mehrere unterschiedliche Steuerbefehle auszulösen; und
d) das Eingabeelement (6) in mindestens drei verschiedene Stellungen in einer ersten Richtung gebracht werden kann, um drei unterschiedliche Informationen einzugeben.

2. Vorrichtung nach Anspruch 1, **dadurch gekennzeichnet, dass** das Eingabeelement (6) eine im wesentlichen parallel zu den Ausgabeelementen (2) verlaufende Steuerleiste ist.

3. Vorrichtung nach Anspruch 2, **dadurch gekennzeichnet, dass** die Steuerleiste (6) aus mindestens zwei unabhängig betätigbaren Steuerleistenelementen besteht.

4. Vorrichtung nach einem der vorhergehenden Ansprüche, **dadurch gekennzeichnet, dass** das Eingabeelement (6) in eine zweite Richtung bewegt werden kann.

5. Vorrichtung nach Anspruch 4, **dadurch gekennzeichnet, dass** die zweite Richtung etwa senkrecht zur ersten Richtung ist.

6. Vorrichtung nach Anspruch 4 oder 5, **dadurch gekennzeichnet, dass** das Eingabeelement (6) in mindestens drei verschiedene Stellungen gebracht werden kann, um so drei unterschiedliche Daten einzugeben.

7. Vorrichtung nach einem der vorhergehenden Ansprüche, **dadurch gekennzeichnet, dass** die Oberfläche des Eingabeelements (6) nicht glatt ist.

## Claims

1. A data input/read-out device, including
a) at least one output element (2), more particularly a Braille element, for outputting Braille data by correspondingly changing the surface profile; and
b) at least one input element (6) for inputting data, the input element (6) being positionable in at least two different positions to thus enter data;
wherein
c) the maximum spacing between the at least one input element (6) and the at least one output element (2) does not exceed a specific maximum value so that the input element (6) and the output element (2) can be touched or actuated simultaneously by one hand to trigger several different control commands independently of the position, and
d) the input element (6) being positionable in at least three different positions in a first direction to input three different items of information.

2. The device as set forth in claim 1, **characterised in that** said input element (6) is a control bar running substantially parallel to said output elements (2).

3. The device as set forth in claim 2, **characterised in that** said control bar (6) consists of at least two independently actuatable control bar elements.

4. The device as set forth in any of the preceding claims, **characterised in that** said input element (6) is shiftable in a second direction.

5. The device according to claim 4, **characterised in that** said second direction is roughly perpendicular to said first direction.

6. The device according to claim 4 or 5, **characterised in that** the input element (6) is positionable into at least three different positions to thus enter three different items of data.

7. The device according to the preceding claims, **characterised in that** the surface of the input element (6) is not smooth.

## Revendications

1. Dispositif d'entrée et de lecture de données comportant :
a) au moins un élément de sortie (2), en particulier un élément braille, pour l'édition de données braille par variation correspondante du profil de surface ;
b) au moins un élément d'entrée (6) pour introduire des données, l'élément d'entrée (6) pouvant être amené dans au moins deux positions différentes, afin d'introduire ainsi des données ; dans lequel
c) la distance maximale entre le ou les éléments d'entrée (6) et le ou les éléments de sortie (2) ne dépasse pas une valeur maximale déterminée, ce qui fait qu'avec une main, on peut toucher ou actionner simultanément l'élément d'entrée (6) et l'élément de sortie (2), afin de déclencher plusieurs instructions de commande différentes indépendamment de la position ; et
d) l'élément d'entrée (6) peut être amené dans au moins trois positions différentes dans une première direction, afin d'introduire trois informations différentes.

2. Dispositif selon la revendication 1, **caractérisé en ce que** l'élément d'entrée (6) est une barre de commande qui s'étend sensiblement parallèlement aux éléments de sortie (2).

3. Dispositif selon la revendication 2, **caractérisé en ce que** la barre de commande (6) est constituée d'au moins deux éléments de barre de commande actionnables indépendamment.

4. Dispositif selon l'une des revendications précédentes, **caractérisé en ce que** l'élément d'entrée (6) peut être déplacé dans une deuxième direction.

5. Dispositif selon la revendication 4, **caractérisé en ce que** la deuxième direction est à peu près perpendiculaire à la première direction.

6. Dispositif selon la revendication 4 ou 5, **caractérisé en ce que** l'élément d'entrée (6) peut être amené dans au moins trois positions différentes, pour introduire ainsi trois données différentes.

7. Dispositif selon l'une des revendications précédentes, **caractérisé en ce que** la surface de l'élément d'entrée (6) n'est pas lisse.
